(19) Europäisches Patentamt
European Patent Office
Office européen des brevets

(11) Veröffentlichungsnummer : **0 107 132**
**B1**

(12) # EUROPÄISCHE PATENTSCHRIFT

(45) Veröffentlichungstag der Patentschrift : **05.03.86**

(51) Int. Cl.[4] : **C 07 F 9/38**

(21) Anmeldenummer : **83110037.5**

(22) Anmeldetag : **07.10.83**

(54) **Verfahren zur Herstellung von 1-Hydroxyalkan-1-phosphonsäuren.**

(30) Priorität : **21.10.82 DE 3238910**

(43) Veröffentlichungstag der Anmeldung : **02.05.84 Patentblatt 84/18**

(45) Bekanntmachung des Hinweises auf die Patenterteilung : **05.03.86 Patentblatt 86/10**

(84) Benannte Vertragsstaaten : **BE CH DE FR GB IT LI NL**

(56) Entgegenhaltungen :
**EP-A- 0 068 350**
**FR-A- 1 472 789**
**FR-A- 1 472 821**
**FR-A- 2 281 376**

(73) Patentinhaber : **HOECHST AKTIENGESELLSCHAFT**
**Postfach 80 03 20**
**D-6230 Frankfurt am Main 80 (DE)**

(72) Erfinder : **Krause, Werner, Dr.**
**Alleestrasse 42**
**D-5030 Hürth (DE)**
Erfinder : **Pieper, Werner, Dr.**
**Am Wachberg 27a**
**D-5042 Erftstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 107 132 B1

Jouve, 18, rue St-Denis, 75001 Paris, France

**Beschreibung**

Vorliegende Erfindung betrifft ein neues Verfahren zur Herstellung von 1-Hydroxyalkan-1-phosphonsäuren.

Hydroxyalkanphosphonsäuren sind beispielsweise als Komplexbildner von technischem Interesse.

Man erhielt sie bislang durch Umsetzung von Aldehyden mit $PCl_3$. Diese Darstellungsweise besitzt jedoch erhebliche Nachteile, da sie mehrstufig über verschiedene Zwischenprodukte verläuft und die in stöchiometrischen Mengen anfallenden Nebenprodukte Chlorwasserstoff und Acetylchlorid sowohl Korrosionsprobleme aufwerfen als auch die Chloridionenbelastung des Abwassers erhöhen.

Aufgabe der vorliegenden Erfindung war es, diese Nachteile der bekannten Arbeitsweise zu überwinden.

Überraschenderweise wurde nun gefunden, daß sich diese Aufgabe in einfacher Weise lösen läßt, wenn man einen Aldehyd mit Tetraphosphorhexoxid ($P_4O_6$) umsetzt und das Umsetzungsprodukt mit Wasser hydrolysiert.

Vorteilhafterweise setzt man den Aldehyd mit dem $P_4O_6$ in einem Molverhältnis von mindestens 4 : 1 um.

Als Aldehyde sind Verbindungen der allgemeinen Formel

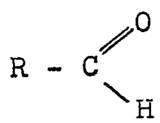

geeignet, in der R für einen halogensubstituierten oder nicht substituierten Alkyl-, Aryl-, Alkaryl- oder Aralkylrest mit 1 bis 18 C-Atomen steht.

Die Durchführung des erfindungsgemäßen Verfahrens kann entweder in der Weise erfolgen, daß man zu vorgelegtem $P_4O_6$, welches gegebenenfalls mit einem inerten organischen Lösungsmittel verdünnt ist, den Aldehyd dosiert oder daß man den Aldehyd vorlegt und das $P_4O_6$, gegebenenfalls mit einem inerten organischen Lösungsmittel verdünnt, zutropft. Der Aldehyd kann ebenfalls mit einem inerten organischen Lösungsmittel verdünnt werden.

Die Umsetzung sollte im Temperaturbereich von 0-100 °C, vorzugsweise im Bereich von 20-70 °C, erfolgen.

Da das erhaltene Rohprodukt polymere bzw. oligomere Bestandteile enthält, empfiehlt es sich, zur Erhöhung der Ausbeute dieses Rohprodukt vom gegebenenfalls vorhandenen Lösungsmittel zu befreien und im Autoklaven mit einem Überschuß an Wasser bei erhöhten Temperaturen und erhöhtem Druck zu hydrolysieren. Die optimale Hydrolysetemperatur ist vom jeweils eingesetzten Aldehyd abhängig und liegt zwischen 100 und 250 °C.

Wie die folgenden Beispiele verdeutlichen, handelt es sich bei dem erfindungsgemäßen Verfahren um einen neuen Zugang zu Phosphorsäuren, die damit in einfacher Weise und in hoher Ausbeute durch Umsetzung von Tetraphosphorhexoxid und Aldehyden herzustellen sind.

### Beispiel 1

In einem Mehrhalskolben mit Rührer, Rückflußkühler, Tropftrichter und Innenthermometer werden unter Stickstoffatmosphäre 27,5 g $P_4O_6$ (0,125 mol) in 100 ml Ethylenglykoldimethylether vorgelegt und eine Lösung von 60 g Phenylacetaldehyd (0,5 mol) in 50 ml Ethylenglykoldimethylether bei 40-50 °C innerhalb von 30 Minuten zugetropft. Nach einer Nachreaktion von 30 Minuten bei 50 °C wird das Lösungsmittel abdestilliert, wobei 120 °C nicht überschritten werden. Zur Hydrolyse werden 50 ml Wasser zugesetzt und das Reaktionsprodukt im Autoklaven 3 Stunden auf 180 °C erwärmt. Danach enthält das Rohprodukt laut NMR-spektroskopischer Untersuchung 85 Gew.% 1-Hydroxy-2-phenylethan-1-phosphonsäure sowie 13,5 Gew.% $H_3PO_3$ und 1,5 Gew.% $H_3PO_4$.

### Beispiel 2

In einer Apparatur analog Beispiel 1 werden 82 g (0,58 mol) Decanal in 200 ml Diethylether vorgelegt und 29 g (0,13 mol) $P_4O_6$ so zugetropft, daß die Reaktionslösung ohne zusätzliche Wärmezufuhr unter Rückfluß siedet. Nach einer 2-stündigen Nachreaktion bei Siedetemperatur wird zu der farblosen, klaren, leicht viskosen Lösung Wasser zugetropft bis keine exotherme Reaktion mehr zu erkennen ist. Bei 60 °C im Vakuum wird das Lösemittel abgezogen, es resultieren 110 g eines bernsteinfarbenen, hochviskosen Produkts. Zur Hydrolyse wird das Produkt in ca. 300 ml heißem Wasser aufgenommen und bei 200 °C 3 Stunden im Autoklaven erhitzt, dann durch Zugabe von Aceton gelöst, von nicht gelösten Bestandteilen abfiltriert und eingedampft.

Das Endprodukt ist ein farbloses Wachs, das aus Aceton umkristallisiert werden kann, wonach 51 g (0,21 mol) 1-Hydroxydecan-1-phosphonsäure in analysenreiner Form erhalten wurden. Schmelzpunkt 164 °C ; Ausbeute nach dem Umkristallisieren 41 %.

Beispiel 3

In einer Apparatur analog Beispiel 1 werden 59 g (0,4 mol) Chloral in 100 ml Ethylenglykoldimethylether vorgelegt und auf Rückflußtemperatur erhitzt. 22 g (0,1 mol) $P_4O_6$ werden innerhalb von 15 Minuten zur Lösung getropft. Nach einer 1-stündigen Nachreaktion bei 70 °C wird mit 15 ml Wasser hydrolysiert und anschließend im Vakuum bis 100 °C eingeengt. Auf diese Weise werden 82 g eines hochviskosen, schwach gelblichen Produkts erhalten, das laut NMR-spektroskopischen Untersuchungen aus folgenden Verbindungen besteht:

66 Gew.% 1-Hydroxy-2,2,2-trichlorethan-1-phosphonsäure
23 Gew.% 1-Hydroxy-2,2,2-trichlorethan-1-phosphonsäure-mono-(2,2,2-trichlor-1-phosphonoethyl)-ester
11 Gew.% Phosphorige Säure

Beispiel 4

In einer Apparatur analog Beispiel 1 werden 27,5 g $P_4O_6$ (0,125 mol) in 100 ml Ethylenglykoldimethylether vorgelegt und eine Lösung von 66,3 g Benzaldehyd (0,625 mol) in 50 ml Ethylenglykoldimethylether bei 40-50 °C innerhalb von 30 Minuten zugetropft. Nach einer Nachreaktion von 1 Stunde bei 50 °C wird mit 25 ml Wasser hydrolysiert und das Lösungsmittel abdestilliert. Der Rückstand enthält laut $^{31}$P-NMR-Spektroskopie ca. 65 P % Hydroxyphenylmethanphosphonsäure neben ca. 20 % nicht identifizierten Phosphonsäurederivaten sowie Phosphorige Säure und Phosphorsäure.

Beispiel 5

In einer Apparatur analog Beispiel 1 werden 27,5 g $P_4O_6$ (0,125 mol) in 100 mol Ethylenglykoldimethylether vorgelegt und eine Lösung von 43,5 g Propionaldehyd (0,75 mol) in 50 ml Ethylenglykoldimethylether zugetropft. Nach einer Nachreaktion von 10 Minuten bei 50 °C werden 10 ml Wasser zugesetzt und das Rohprodukt am Rotationsverdampfer bis zur Trockene eingedampft. Die NMRspektroskopische Untersuchung führt zu folgender Zusammensetzung des Rohprodukts:

21 Gew.% 1-Hydroxypropan-1-phosphonsäure
71 Gew.% 1-Hydroxypropan-1-phosphonsäure-mono-(1-phosphonopropyl)-ester
7 Gew.% Phosphorige Säure
1 Gew.% Phosphorsäure

Zur weiteren Hydrolyse wird das Rohprodukt im Autoklaven in wäßriger Lösung 3 h auf 180 °C erwärmt. Das auf diese Weise erhaltene Reaktionsprodukt besitzt folgende Zusammensetzung ($^{31}$P-NMR):

82 Gew.% 1-Hydroxypropan-1-phosphonsäure
9 Gew.% 1-Hydroxypropan-1-phosphonsäure-mono-(1-phosphonopropyl)-ester
7 Gew.% Phosphorige Säure
2 Gew.% Phosphorsäure

**Patentansprüche**

1. Verfahren zur Herstellung von 1-Hydroxyalkan-1-phosphonsäuren, dadurch gekennzeichnet, daß man einen Aldehyd mit Tetraphosphorhexoxid ($P_4O_6$) umsetzt und das Umsetzungsprodukt mit Wasser hydrolysiert.

2. Verfahren nach Anspruch 1, dadurch gekennzeichnet, daß man den Aldehyd mit dem $P_4O_6$ in einem Molverhältnis von mindestens 4 : 1 umsetzt.

3. Verfahren nach Anspruch 1 oder 2, dadurch gekennzeichnet, daß man als Aldehyde Verbindungen der allgemeinen Formel

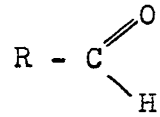

einsetzt, in der R für einen halogensubstituierten oder nicht substituierten Alkyl-, Aryl-, Alkylaryl- oder Aralkylrest mit 1 bis 18 C-Atomen steht.

4. Verfahren nach einem der Ansprüche 1 bis 3, dadurch gekennzeichnet, daß man die Umsetzung im Temperaturbereich von 0-100 °C durchführt.

5. Verfahren nach einem der Ansprüche 1 bis 4, dadurch gekennzeichnet, daß man das rohe Umsetzungsprodukt vom gegebenenfalls vorhandenen Lösungsmittel befreit und mit einem Überschuß an Wasser bei erhöhtem Druck und erhöhten Temperaturen hydrolysiert.

6. Verfahren nach Anspruch 5, dadurch gekennzeichnet, daß man das rohe Umsetzungsprodukt bei Temperaturen zwischen 100 und 250 °C hydrolysiert.

**Claims**

1. Process for making 1-hydroxyalkane-1-phosphonic acids, which comprises reacting an aldehyde with tetraphosphorus hexoxide ($P_4O_6$) and hydrolyzing the reaction product with water.

2. Process as claimed in claim 1, wherein the aldehyde and $P_4O_6$ are reacted in a molar ratio of at least 4 : 1.

3. Process as claimed in claim 1 or 2, wherein the aldehyde is a compound of the general formula

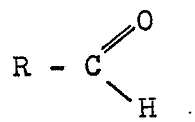

in which R stands for a halogeno-substituted or unsubstituted alkyl, aryl, alkylaryl or aralkyl group having from 1 to 18 carbon atoms.

4. Process as claimed in any of claims 1 to 3, wherein the reaction is effected at a temperature within the range 0 to 100 °C.

5. Process as claimed in any of claims 1 to 4, wherein the crude reaction product is freed from solvent, if any, and hydrolyzed with the use of an excess of water under increased pressure and at increased temperatures.

6. Process as claimed in claim 5, wherein the crude reaction product is hydrolyzed at temperatures between 100 and 250 °C.

**Revendications**

1. Procédé de préparation d'acides 1-hydroxyalcane-1-phosphoniques, caractérisé en ce que l'on fait réagir un aldéhyde avec l'hexoxyde de tétraphosphore ($P_4O_6$) et on hydrolyse le produit de réaction par l'eau.

2. Procédé selon la revendication 1, caractérisé en ce que l'on fait réagir l'aldéhyde avec le $P_4O_6$ dans un rapport molaire d'au moins 4 : 1.

3. Procédé selon la revendication 1 ou 2, caractérisé en ce que l'on utilise comme aldéhydes des composés de formule générale

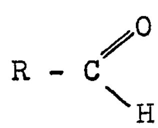

dans laquelle R représente un groupe aralkyle, alkylaryle, aryle ou alkyle en $C_1$-$C_{18}$ halogéno substitué ou non substitué.

4. Procédé selon l'une des revendications 1 à 3, caractérisé en ce que l'on effectue la réaction dans une gamme de températures de 0 à 100 °C.

5. Procédé selon l'une des revendications 1 à 4, caractérisé en ce que l'on débarrasse le produit de réaction brut du solvant éventuellement présent et on l'hydrolyse par un excès d'eau sous pression et à températures élevées.

6. Procédé selon la revendication 5, caractérisé en ce que l'on hydrolyse le produit de réaction brut à des températures comprises entre 100 et 250 °C.